# EUROPÄISCHE PATENTANMELDUNG

(11) **EP 2 107 031 A1**
(43) Veröffentlichungstag der Anmeldung: **07.10.2009**
(21) Anmeldenummer: 08006285.4
(22) Anmeldetag: 31.03.2008
(51) Int. Cl.: B66B 7/04, F16F 9/00

(54) **Rollenführungsfeder**

(71) Anmelder: ThyssenKrupp Elevator AG, 40211 Düsseldorf (DE)
(72) Erfinder: Altenburger, Stefan, 70794 Filderstadt (DE)
(74) Vertreter: Deissler, K. Michael

(57) **Zusammenfassung**

Es wird eine Rollenführungsfeder (8) für eine Rollenführung eines Aufzuges bereitgestellt, wobei die Rollenführungsfeder (8) mindestens ein Federelement und mindestens ein Dämpfungselement umfasst und das Dämpfungselement von dem Federelement entkoppelt ist.

## Beschreibung

Die Erfindung betrifft eine Rollenführungsfeder mit mindestens einem Federelement und mindestens einem Dämpfungselement, insbesondere eine Rollenführungsfeder für eine Rollenführung eines Aufzugs, wobei die Rollenführungsfeder mindestens ein Federelement und mindestens ein Dämpfungselement umfasst.

Rollenführungen für Aufzüge weisen in der Regel Laufrollen auf, die an Führungsschienen des jeweiligen Aufzugs abrollen und einen Fahrkorb auf einem durch die Führungsschienen vorgegebenen Weg führen. Jede Rollenführung weist in der Regel einen Rollenbock auf, der starr mit dem Fahrkorb verbunden bzw. an diesem befestigt ist. An dem Rollenbock ist schwenkbar mindestens eine Aufhängung bzw. ein Rollenhebel befestigt, die bzw. der als Lagerung für die Laufrollen ausgebildet ist. Üblicherweise umfasst die Rollenführung jeweils drei Aufhängungen bzw. Rollenhebel. Durch Schwenken des Rollenhebels ist es möglich, die Position der Laufrolle bezüglich des Fahrkorbs zu verändern.

Auf diese Weise kann durch eine Bewegung des Rollenhebels die daran gelagerte Laufrolle an bzw. gegen die jeweilige Führungsschiene gepresst werden. Insbesondere wird durch das Anpressen ein stetiger Kontakt der Laufrolle mit der Führungsschiene gewährleistet, der auch bei einer asymmetrischen Beladung und einer hieraus resultierenden Schräglage bzw. Schrägstellung des Fahrkorbs sowie Unebenheiten der Führungsschiene mittels des Anpressdrucks sichergestellt werden kann.

Der Anpressdruck bzw. die dazugehörige Anpresskraft wird bei den bisher bekannten Rollenführungen für gewöhnlich mittels einer Spiralfeder erzeugt, die den Rollenhebel derart unter Vorspannung setzt, dass die Laufrolle an die Führungsschiene gepresst wird. Des weiteren ist in der Regel ein separater Dämpfer vorgesehen, der eine Schwenkbewegung des Rollenhebels bezüglich des Rollenbocks dämpft. Dies ist insbesondere während der Fahrt des Fahrkorbs notwendig, um Stöße und Rückfederbewegungen des Rollenhebels nach einer Auslenkung zu dämpfen. Außerdem ist in der Regel ein separater mechanischer Endanschlag vorgesehen, der die Schwenkbewegung des Rollenhebels bezüglich des Rollenbocks begrenzt und eine maximal mögliche Auslenkung vorgibt. Die drei separaten Bauteile Spiralfeder, Dämpfer und Endanschlag werden jeweils separat voneinander an dem Rollenhebel und an dem Rollenbock befestigt und benötigen einen entsprechend großen Bauraum sowie einen hohen Montageaufwand, da sie einzeln montiert werden müssen.

Aus dem Stand der Technik ist eine gefederte Rollenführung mit optionaler Dämpfung bekannt, die drei Rollenhebel mit jeweils einer Laufrolle vorsieht, die die Führungsschiene dementsprechend von drei Seiten beaufschlägt. Dabei sind zwei der Laufrollen gegenüberliegend voneinander bezüglich der Führungsschiene angeordnet und beaufschlagen entgegengesetzte Laufflächen der Führungsschiene. Hierbei wirken die Druckkräfte der zugehörigen Rollenhebel entgegengerichtet und heben sich in einer neutralen Lage des Fahrkorbs nach außen hin auf. Eine neutrale Lage beschreibt bspw. einen unbeladenen Fahrkorb im Stillstand. Auch eine dritte Laufrolle der beschriebenen Rollenführung, die in der Regel zwischen den beiden gegenüberliegenden Laufrollen angeordnet ist, wird in einer neutralen Lage des Fahrkorbs von einer Druckkraft an die Führungsschiene angepresst. Dies ist der Fall, da ein Fahrkorb in der Regel mindestens zwei der beschriebenen Rollenführungen umfasst, die jeweils eine mittlere Laufrolle aufweisen. Deren Druckkräfte sind entgegengesetzt gerichtet und heben sich in einer neutralen Lage des Fahrkorbs ebenfalls gegenseitig nach außen auf.

Trotz der neutralen Lage und der sich nach außen hin aufhebenden Druck- bzw. Federkräfte werden die Laufrollen weiterhin gegen die Führungsschiene gepresst, wodurch speziell im Stillstand der Laufräder bzw. des Fahrkorbs eine Abplattung der Laufrollen hervorgerufen wird, die sich wiederum im Betrieb durch Vibrationen und eine zusätzliche Geräuschentwicklung beim Abrollen der Laufräder störend bemerkbar macht und zu einem übermäßigen Verschleiß führt. Da die Anpresskraft selbst durch die Spiralfedern hervorgerufen wird, ist sie gemäß dem Stand der Technik proportional zu der in der Regel linearen Federcharakteristik der Federkennlinie der Spiralfedern und weist somit auch in der neutralen Lage eine vergleichsweise große Druckkraft auf, die die beschriebene Abplattung der Laufrollen verursacht.

Aus EP 1 473 265 A1 ist beispielsweise eine Rollenführung bekannt, die ein Verbindungselement mit einem ersten und einem zweiten elastischen Element in serieller Anordnung vorsieht, wobei eine Steifigkeit des zweiten elastischen Elements bei einer Kompression des Elements anwächst. Jedoch stellt das Verbindungselement kein entkoppeltes Dämpfungselement zur Dämpfung der Bewegung eines Führungselements der Rollenführung bereit.

Es stellt sich somit die Aufgabe, eine gedämpfte Rollenführungsfeder für einen Aufzug bereitzustellen, die einen geringen Bauraumbedarf insbesondere im Bereich eines Rollenhebels benötigt sowie den dazugehörigen Montageaufwand reduziert. Weiterhin soll eine Abplattung der Laufrollen reduziert bzw. weitgehend verringert werden und ein Dämpfungselement der Rollenführungsfeder von einem Federelement der Rollenführungsfeder entkoppelt sein.

Hierzu wird gemäß der Beschreibung eine Rollenführungsfeder für eine Rollenführung eines Aufzugs bereitgestellt, die mindestens ein Federelement und mindestens ein Dämpfungselement umfasst und das Dämpfungselement von dem Federelement entkoppelt ist.

Dies bedeutet, dass das mindestens eine Federelement und das mindestens eine Dämpfungselement in der Rollenführungsfeder integriert bzw. zusammengefasst sind und die Rollenführungsfeder auf diese Weise entsprechende Funktionen zur Erzeugung einer Druckkraft und einer Dämpfung einer Schwingung in einer einzigen Baugruppe zusammenfasst. Außerdem ist das Federelement und das Dämpfungselement voneinander entkoppelt ausgeführt. Unter einer Entkopplung sind hierbei insbesondere unterschiedliche Abhängigkeiten der einzelnen Elemente von physikalischen Größen zu verstehen. Während eine Federwirkung des Federelements von einer Auslenkung bzw. einer Kompression des Federelements bzw. der Rollenführungsfeder und somit von einer Wegstrecke abhängig ist, ist eine Dämpfungswirkung des Dämpfungselements von einer momentanen Geschwindigkeit bzw. einer Geschwindigkeit einer Auslenkungsänderung der Rollenführungsfeder abhängig. Somit ist für das Dämpfungselement eine momentane Geschwindigkeit bzw. eine Kompressions- oder Expansionsgeschwindigkeit der Rollenführungsfeder bestimmend.

Beispielsweise kann die Rollenführungsfeder als ein Zylinder mit mindestens einem darin verschiebbaren Kolben ausgebildet sein, in dem ein Fluid komprimiert und/oder verdrängt wird, vergleichbar einem Druckkolben oder einem so genannten Federbein. Insbesondere erlaubt die Komprimierung eines Fluids die Bereitstellung einer Federwirkung bzw. die Erzeugung der Druckkraft des Federelements und ein Verdrängen eines Fluids die Bereitstellung einer Dämpfungswirkung des Dämpfungselements. Als Fluid kann bspw. jedes geeignete Gas oder jede geeignete Flüssigkeit bzw. eine Kombination beider Fluidarten zum Einsatz kommen. Selbstverständlich muss ein Fluid, das zu einer Kompression vorgesehen ist, komprimierbar sein.

Ebenso ist zur Erzeugung der Druckkraft bzw. der Federwirkung die Verwendung von geeigneten Federn verschiedenster Form, wie beispielsweise Spiralfedern, als Federelement möglich. Selbstverständlich kann auch eine Kombination aus Federn und einem oder mehreren Fluiden zum Einsatz kommen. Weiterhin ist auch eine Verwendung von Federpaketen mit progressiven Kennlinien und/oder eine Verwendung eines komprimierbaren Feststoffs möglich, der über elastische Verformungseigenschaften verfügen kann, wie beispielsweise Gummi oder Schaumstoff.

Grundsätzlich ist jedoch unter dem zur Erzeugung einer Federwirkung vorgesehenen Federelement ein Federmittel zu verstehen, das sowohl eine Vorrichtung zur unmittelbaren Bereitstellung einer Federwirkung als auch eine Anordnung oder Einrichtung anderer Vorrichtungen vorsieht, die aufgrund ihrer Anordnung mittelbar eine Federwirkung bereitstellen. Somit kann das Federelement neben gewöhnlichen Federn auch eine entsprechende Anordnung von Bauteilen oder Vorrichtungen umfassen, die geeignet ist, eine Federwirkung bereitzustellen. Diese kann bspw. mit der voranstehend genannten Komprimierung eines Fluids erzielt werden. Grundsätzlich ist jedoch die erzielte Federwirkung, wie voranstehend dargestellt, wegabhängig und somit die Federkraft proportional zu einem Federweg.

Unter dem zur Erzeugung einer Dämpfungswirkung vorgesehenen Dämpfungselement ist ein Dämpfungsmittel zu verstehen, das sowohl eine Vorrichtung zur expliziten Bereitstellung einer Dämpfungswirkung als auch eine Anordnung oder Einrichtung anderer Vorrichtungen vorsehen kann, die aufgrund ihrer Anordnung eine Dämpfungswirkung bereitstellen. Somit kann das Dämpfungselement neben jeder geeigneten Ausführung eines eigenständigen Dämpfers auch eine Anordnung von Bauteilen umfassen, die geeignet ist, eine Dämpfungswirkung bereitzustellen. Dies kann bspw. durch die voranstehend genannte Verdrängung eines Fluids erfolgen.

Unter einem Dämpfungselement ist hierbei jedoch in beiden Fällen eine Konstruktion oder eine Anordnung von Bauteilen zu verstehen, die aufgrund gezielter Maßnahmen und Ausgestaltungen die Dämpfung einer Bewegung bewirkt.

Es ist hierunter jedoch nicht lediglich eine sogenannte Eigendämpfung zu verstehen, die zwangsläufig in einem System von Natur aus aufgrund innerer Reibungseffekte bspw. auch bei Spiralfedern oder einem komprimierbaren Feststoff auftritt und in der Regel nur eine geringe Dämpfungswirkung aufweist. Auch ist das Dämpfungselement nicht als Puffer zu verstehen, der im wesentlichen einen Anschlag mit einer gewissen Dämpfung oder Eigendämpfung aufweist und eine Bewegung lediglich in einem Bereich kurz vor dem Anschlag puffert.

Vielmehr kann das beschriebene Dämpfungselement vorgesehen sein, um eine Bewegung der Rollenführungsfeder mindestens in einem großen Bereich ihres Bewegungsumfangs oder sogar in ihrem im wesentlichen vollen Bewegungsumfang zu dämpfen.

Insbesondere hängt hierbei die Dämpfungswirkung des Dämpfungselements von der Geschwindigkeit der Auslenkungsänderung der Rollenführungsfeder ab und nicht von der tatsächlichen Auslenkung (als Position) der Rollenführungsfeder. Das Dämpfungselement stellt somit sowohl bei einer Kompression als auch bei einer Expansion der Rollenführungsfeder eine Dämpfungswirkung bereit. Diese Dämpfungswirkung ist proportional zur momentanen Auslenkungsänderung bzw. der Kompressions- oder Expansionsgeschwindigkeit der Rollenführungsfeder.

Entsprechend einer weiteren Ausführungsform umfasst die Rollenführungsfeder außerdem ein Anschlagelement.

Bei einer weiteren Ausführungsform umfasst das Anschlagelement mindestens einen mechanischen Anschlag. Es kann somit bspw. ein Endanschlag durch eine mechanische Blockade in oder an dem Zylinder realisiert werden. Selbstverständlich ist jedoch jede andere geeignete Form des Anschlags möglich, die geeignet ist, einen Anschlag bzw. eine Blockade im Zylinder zu realisieren.

In Ausgestaltung weist eine Federkennlinie des mindestens einen Federelements einen progressiven Kurvenverlauf bzw. eine progressive Federcharakteristik auf. Entgegen dem bei Spiralfedern für gewöhnlich üblichen linearen Verlauf der Federkennlinie, die einen linearen Anstieg der Federkraft über deren Auslenkung beschreibt, stellt ein progressiver Kurvenverlauf eine überproportionale Kraftzunahme mit betragsmäßig zunehmender Auslenkung dar. Somit kann bei einer geringen Auslenkung eine geringe Druckkraft sowie bei einer großen Auslenkung eine große Druckkraft erzielt werden. Dies bietet die Möglichkeit, dass bei einer kleinen Auslenkung auch nur eine geringe Federkraft und damit eine geringe Reaktionskraft bzw. Rückstellkraft auftritt, die auch auf den Fahrkorb wirkt. Die progressive Kennlinie und damit das Fahrverhalten des Fahrkorbs ist daher toleranter gegenüber kleinen Unebenheiten der Führungsschiene und somit erfährt der Fahrkorb selbst geringere Rückstellkräfte, die dem Fahrkomfort von Passagieren zu Gute kommen. Des weiteren kann bei der progressiven Kennlinie im Vergleich zu einer linearen Kennlinie bei gleicher Maximalkraft für große Auslenkungen die Anpresskraft bei kleinen Auslenkungen und insbesondere in der neutralen Lage deutlich reduziert werden. Dies bedeutet, dass die Laufrollen im Stillstand des Fahrkorbs eine deutlich geringere Anpresskraft bzw. einen geringeren Anpressdruck auf die Führungsschiene erfahren. Die hierdurch bedingte Abplattung der Laufrollen kann auf diese Weise deutlich reduziert werden, wodurch die hierdurch verursachten Vibrationen und Laufgeräusche sowie der übermäßige Verschleiß im Betrieb reduziert werden. Als weiteren Aspekt wird mittels der progressiven Kennlinie ein Aufschaukeln des Fahrkorbs verhindert. Die entsprechend ansteigende Kraft bei zunehmender Auslenkung wirkt der Entstehung einer Schaukelbewegung entgegen. Das Federelement ist daher unabhängig von seiner tatsächlichen Ausgestaltung derart ausgebildet, dass seine Federcharakteristik der einer Druckfeder mit progressiver Kennlinie entspricht.

Entsprechend einer weiteren Ausgestaltungsform ist das Federelement zur Veränderung der Federwirkung einstellbar und die Federcharakteristik bzw. der Kurvenverlauf der Federkennlinie variierbar. Beispielsweise lässt sich durch die Veränderung der Druckbeaufschlagung des Fluids, insbesondere eines Gasdrucks, die Federwirkung des Federelements verändern. Werden dagegen Federn eingesetzt, so sind hierzu entsprechende geeignete Maßnahmen zur Veränderung bzw. Veränderbarkeit der Federwirkung vorzusehen. Die Einstellbarkeit des Federelements kennzeichnet insbesondere die Eigenschaft, das die Einstellung ohne großen und umfangreichen Montageaufwand durchgeführt werden kann. Es soll dabei bspw. ein Austausch von Komponenten unnötig werden. Dies wird z.B. durch die genannte Veränderung der Druckbeaufschlagung des Fluids erreicht und erlaubt insbesondere eine einfache Veränderung, die vor Ort leicht ausführbar ist. Außerdem ermöglicht eine derartige Einstellbarkeit eine stufenlose Verstellung bzw. Einstellung, die sich insbesondere zu einer reproduzierbaren Einstellung von spezifischen Parametern des Federelements eignet. Beispielsweise ist es möglich, durch Verschieben des Arbeitspunkts des Fluids in der neutralen Lage des Fahrkorbs die Steigung der Kennlinien und somit einen entsprechenden Kraftanstieg zu verändern.

Des weiteren kann das Dämpfungselement zur Veränderung der Dämpfungswirkung einstellbar und eine Dämpfungscharakteristik des Dämpfungselements variierbar sein. Durch Veränderung des Strömungswiderstands des Fluids lässt sich die Dämpfung verändern, wie bspw. durch eine Größenänderung von Durchtrittsöffnungen für das Fluid. Die Einstellbarkeit des Dämpfungselements ist hierbei als Eigenschaft entsprechend der voranstehenden Beschreibung zur Einstellbarkeit des Federelements zu verstehen und erlaubt ebenfalls eine einfache Einstellbarkeit vor Ort, die stufenlos und reproduzierbar erfolgen kann. Grundsätzlich besteht keine Verknüpfung oder Kopplung zwischen dem Federelement und dem Dämpfungselement hinsichtlich ihrer Einstellbarkeit. Beide Elemente sind vielmehr unabhängig voneinander einstellbar.

Weiterhin kann der progressive Kurvenverlauf der Federkennlinie durch eine geeignete Ausführung einer Kinematik der Rollenführung bereitgestellt sein. Beispielsweise umfasst hierbei die Kinematik der Rollenführung exzentrische Lagerungen, die einen überproportionalen Anstieg der Rückstellkraft bzw. der Federkraft gegenüber der Auslenkung bereitstellt.

Entsprechend einer anderen Ausführungsform umfasst die Rollenführungsfeder mindestens einen Sensor. Hierbei kann der mindestens eine Sensor derart ausgebildet sein, dass eine Auslenkung bzw. eine Längenänderung der Rollenführungsfeder in einer Längsrichtung der Rollenführungsfeder mittels des mindestens einen Sensors bestimmbar ist.

Außerdem kann der mindestens eine Sensor mindestens einen Drucksensor umfassen.

Entsprechend einer Ausführungsform ist die beschriebene Rollenführungsfeder zum Einbau in eine Rollenführung eines Aufzugs vorgesehen. Die Rollenführung eines Fahrkorbs umfasst hierbei einen Rollenbock und mindestens eine Aufhängung, die bewegbar an dem Rollenbock angeordnet und zur Lagerung von mindestens einer Laufrolle ausgebildet ist. Zudem umfasst die Rollenführung die mindestens eine Rollenführungsfeder, die wirksam mit der Aufhängung und dem Rollenbock verbunden ist, wobei die Rollenführungsfeder das mindestens eine Federelement und das mindestens eine Dämpfungselement umfasst und das Dämpfungselement von dem Federelement entkoppelt ist.

Weiterhin kann die mindestens eine Aufhängung mindestens einen Rollenhebel umfassen, der schwenkbar an beispielsweise dem Rollenbock der Rollenführung angeordnet ist.

Entsprechend einer weiteren Ausführungsform umfasst die Rollenführung die voranstehend beschriebene Rollenführungsfeder, wobei eine Position der Aufhängung bzw. der Laufrolle bezüglich der Rollenführung mittels des mindestens einen Sensors bestimmbar ist.

Des weiteren kann die Rollenführung Vorrichtungen zum Auslesen und Bereitstellen eines Sensorsignals des mindestens einen Sensors umfassen.

Auf diese Weise ist es beispielsweise möglich, zunächst eine Auslenkung bzw. Längenänderung der Rollenführungsfeder mittels des Sensors zu bestimmen und hieraus auf die Position des Rollenhebels zu schließen. Die Position der Laufrollen ermöglicht wiederum, aus dieser einen Verschleiß der Laufrollen sowie eine Abnutzung oder den allgemeinen Zustand bzw. Ungenauigkeiten der Führungsschiene abzuleiten. Umfasst der mindestens eine Sensor einen Drucksensor, so kann über diesen der der Druck des Fluids, bspw. der Gasdruck, in dem mindestens einen Federelement und/oder dem mindestens einen Dämpfungselement der Rollenführungsfeder gemessen werden und anhand des Drucks des Fluids auf die Auslenkung bzw. die Längenänderung der Rollenführungsfeder geschlossen und die oben genannten Rückschlüsse abgeleitet werden.

Außerdem kann, wie voranstehend beschrieben, das Federelement zur Veränderung der Federwirkung und/oder das Dämpfungselement zur Veränderung der Dämpfungswirkung einstellbar sein und die Rollenführung außerdem Vorrichtungen zum Einstellen des Federelement und/oder des Dämpfungselements umfassen.

Beispielsweise ist es möglich, dass die Vorrichtungen zum Einstellen des Federelements und/oder des Dämpfungselements zu einer Druckänderung in dem Federelement und/oder in dem Dämpfungselement ausgebildet sind.

Somit ist es möglich, dass der Druck des Fluids mit Hilfe der Vorrichtungen zum Einstellen verändert werden kann und an entsprechende Anforderungen anpassbar ist. Dies erlaubt quasi per Knopfdruck durch eine Einstellung des Drucks in der Rollenführungsfeder eine Fahrwerksabstimmung zu verändern. Dies kann geschehen, um das Fahrwerk an den entsprechenden Typ des Aufzugs anzupassen oder aber auch um kontinuierlich während des regulären Betriebs eine Abstimmung vorzunehmen. Gemäß der voranstehenden Darstellung erfolgt hierbei die Einstellung des Federelements und des Dämpfungselements grundsätzlich unabhängig voneinander, so dass eine gezielte Anpassung bzw. Einstellung mindestens eines der beiden Elemente möglich ist. Eine Einstellung des Dämpfungselements ist des weiteren bspw. auch durch eine Veränderung der Viskosität des jeweiligen Fluids oder mittels Querschnittsänderungen von Durchtrittsöffnungen für das Fluid möglich.

Beispielsweise ist es somit möglich, anhand des Sensorsignals des mindestens einen Sensors die genannten Ungenauigkeiten der Führungsschiene selektiv zu korrigieren oder auf einen aktuellen asymmetrischen Beladungszustand des Fahrkorbs zu reagieren und über die Federkraft eine Schieflage des Fahrkorbs auszugleichen. Außerdem lassen sich auf diese Weise Schwingungen des ganzen Fahrkorbs ausregeln.

Die Vorrichtungen zum Einstellen des Federelements und/oder des Dämpfungselements umfassen beispielsweise eine Druckversorgung. Diese kann des weiteren als zentrale Druckversorgung mit einem Druckreservoir ausgebildet sein und erlaubt damit eine zentrale Steuerung der Rollenführungsfeder oder mehrerer Rollenführungsfedern. Ebenso ist es möglich als Fluid Umgebungsluft einzusetzen, die beispielsweise über einen Kompressor zugeführt wird.

Die genannte Einstellbarkeit des mindestens einen Federelements und/oder des mindestens einen Dämpfungselements bietet darüber hinaus die Möglichkeit, eine geeignete Ausführungsform einer Rollenführungsfeder für verschiedene Aufzüge und eine große Bandbreite an Aufzugstypen auf einfache Art und Weise anzupassen, ohne konstruktive Änderungen vornehmen zu müssen. Die Rollenführungsfeder kann vielmehr vor Ort individuell nach den Bedürfnissen des jeweiligen Aufzugs eingestellt werden. Insbesondere erlaubt die dargestellte Einstellbarkeit eine stufenlose Veränderung und Anpassung des Feder- und/oder des Dämpfungselements.

Weiterhin wird ein entsprechendes Verfahren zur Einstellung der voranstehend beschriebenen Rollenführungsfeder bereitgestellt, das die folgenden Schritte umfasst:

Bereitstellen einer Rollenführungsfeder, die wirksam mit einer Aufhängung und einem Rollenbock einer Rollenführung verbunden ist, mit mindestens einem Federelement, mindestens einem Dämpfungselement und mindestens einem Sensor, wobei das mindestens eine Dämpfungselement von dem mindestens einen Federelement entkoppelt ist und das Federelement zur Veränderung einer Federwirkung und/oder das Dämpfungselement zur Veränderung der Dämpfungswirkung einstellbar

sind,

Auslesen von Sensorsignalen aus dem Sensor,

Verarbeiten der Sensorsignale,

Ansteuern von Vorrichtungen zum Einstellen des Federelements und/oder des Dämpfungselements.

Des weiteren können die Schritte des Auslesens, Verarbeitens und Ansteuerns fernsteuerbar und/oder automatisch ausführbar sein. Die voranstehend dargestellte Einstellung des Federelements und/oder des Dämpfungselements lassen sich auf diese Weise automatisch beispielsweise ohne Fachpersonal oder aber aus der Ferne durchführen. Unter einer automatischen Einstellung ist auch eine vollautomatische Einstellung mittels der hierzu nötigen Vorrichtungen zu verstehen.

Die für das Verfahren beschriebene Rollenführung entspricht der voranstehend beschriebenen Rollenführung für einen Aufzug.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.
- Figur 1: zeigt eine Seitenansicht einer Rollenführung für einen Aufzug mit einer Federung gemäß dem Stand der Technik sowie mit einer Rollenführungsfeder in schematischer Darstellung.
- Figur 2: zeigt die Rollenführungsfeder und eine Druckversorgung in schematischer Darstellung.
- Figur 3: zeigt einen Kraftverlauf einer Feder mit einer linearen Kennlinie sowie einen Kraftverlauf einer Kennlinie mit einer progressiven Kennlinie in schematischer Darstellung.

Die Figuren werden zusammenhängend und übergreifend beschrieben, gleiche Bezugszeichen bezeichnen gleiche Bauteile.

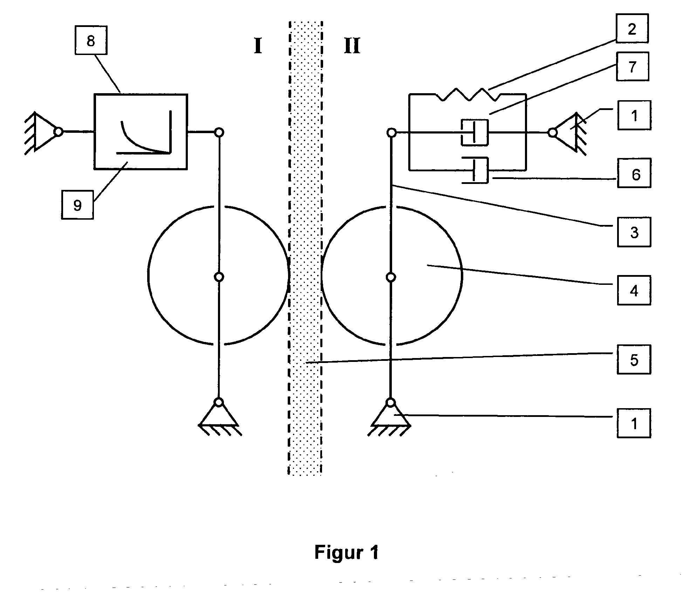

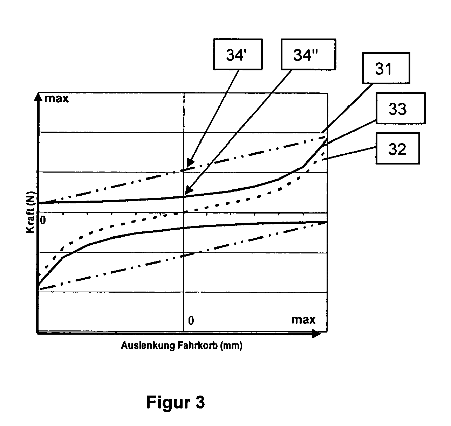

Die in Figur 1 dargestellte Rollenführung zeigt sowohl eine Rollenführung mit einer Rollenführungsfeder (linker Abschnitt I) als auch eine Rollenführung gemäß dem Stand der Technik (rechter Abschnitt II). Bei einer herkömmlichen Rollenführung nach dem Stand der Technik (rechter Abschnitt II) werden Laufrollen 4 über Rollenhebel 3 mittels Druckfedern 2 an eine Führungsschiene 5 gedrückt. Die Druckfedern 2 stützen sich an einem Rollenbock 1 ab. Die Druckkräfte zweier auf entgegengesetzten Laufflächen der Führungsschiene 5 abrollender Laufräder 4 sind gegengerichtet und heben sich in einer neutralen Lage eines mit dem Rollenbock verbundenen Fahrkorbs nach außen hin im wesentlichen auf. Trotzdem verbleibt eine Anpresskraft auf die einzelnen Laufrollen 4, die nach dem Stand der Technik durch eine lineare Federcharakteristik der Kennlinie der Druckfeder 2 üblicherweise ca. die Hälfte einer Maximalkraft der Druckfedern 2 betragen kann (vgl. Figur 3). Diese Anpresskraft kann gemäß dem Stand der Technik im Stillstand des Fahrkorbs zu einer Abplattung der Laufrollen 4 führen, wodurch wiederum Vibrationen und Rollgeräusche im Betrieb verursacht werden. Neben der Druckfeder 2 umfasst die Rollenführung nach dem Stand der Technik des weiteren eine Dämpfung 6 sowie einen Anschlag 7.

Eine Rollenführung (linker Abschnitt I) ersetzt die separate Druckfeder 2 und die Dämpfung 6 durch ein einziges Bauteil, die Rollenführungsfeder 8. Diese verbindet ebenfalls den Rollenhebel 3 mit dem Rollenbock 1 und presst die Laufrolle 4 gegen die Führungsschiene 5. Hierzu umfasst die Rollenführungsfeder 8 mindestens ein Federelement und mindestens ein Dämpfungselement, wobei das Dämpfungselement von dem Federelement entkoppelt ist. Optional kann die Rollenführungsfeder 8 des weiteren einen Anschlag (nicht dargestellt) umfassen, der den herkömmlichen Anschlag 7 ebenfalls in der Rollenführungsfeder 8 integriert. Die Rollenführungsfeder 8 erfüllt somit die Funktionen der Erzeugung einer Druckkraft und einer Dämpfung einer Schwingung des Rollenhebels 3, indem diese das Federelement sowie das Dämpfungselement integriert. Darüber hinaus weist das in der Rollenhebelfeder 8 integrierte Federelement eine progressive Federkennlinie 9 auf bzw. ist derart ausgebildet, dass das Federelement einer Druckfeder 2 mit progressiver Kennlinie entspricht.

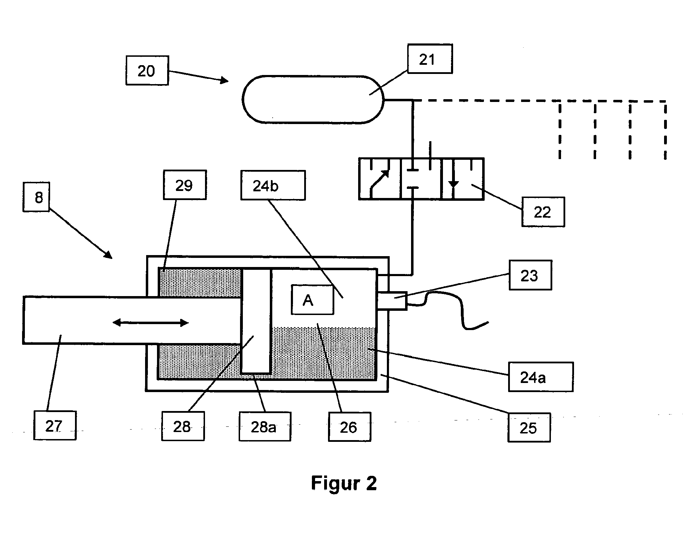

Figur 2 zeigt die Rollenführungsfeder 8 und eine Druckversorgung 20 in schematischer Darstellung. Die Rollenführungsfeder 8 umfasst einen Zylinder 25 mit einem Druckraum 26, der mit einem ersten flüssigen Fluid 24a (bspw. Öl) und einem zweiten gasförmigen Fluid 24b (bspw. Luft) befüllt ist. Die Rollenführungsfeder 8 umfasst des weiteren eine Kolbenstange 27, die in den Druckraum 26 mit einem ersten Ende hineinragt, an dem ein Kolben 28 angeordnet ist. Selbstverständlich ist es ebenso möglich, mehrere Kolben 28 vorzusehen. Die Kolbenstange 27 erstreckt sich in einer Längsrichtung des Zylinders 24 und ist entlang der Längsrichtung verschiebbar (siehe Doppelpfeil), so dass der Kolben 28 in dem Druckraum 26 bewegbar ist. Bei dieser Bewegung in dem Druckraum 26 verdrängt der Kolben 28 insbesondere das erste flüssige Fluid 24a, das den Kolben 28 umströmen bzw. durch eine Öffnung oder einen Spalt 28a hindurchströmen muss und folglich die Bewegung des Kolbens 28 dämpft. Der Kolben ist entsprechend der dargestellten Ausführungsform derart ausgebildet, dass der Spalt 28a an einem unteren Bereich des Kolbens 28 angeordnet ist. In einem oberen Bereich ist der Kolben 28 auf geeignete Weise (nicht dargestellt) gegenüber dem Zylinder 25 abgedichtet. Das erste flüssige Fluid 24a weist gegenüber dem zweiten Fluid 24b eine höhere Dichte auf, so dass das zweite Fluid 24b aufgrund der Schwerkraft in einem oberen Bereich A des Druckraums 26 angeordnet ist und bei einer waagrechten Ausrichtung der Rollenführungsfeder 8 (wie dargestellt) den Bereich A des Druckraums 26 nicht verlassen kann. Bei einer Bewegung des Kolbens (in Richtung des Bereichs A) wird das zweite gasförmige Fluid 24b komprimiert, so dass eine Federwirkung erzielt wird. Es kann somit mittels des Kolbens 28, dem Zylinder 25 und dem zweiten gasförmigen Fluid 24b ein Federelement bereitgestellt werden.

Des weiteren bewirkt die Umströmung des Kolbens 28 eine Dämpfungswirkung, so dass mittels des Kolbens 28, dem Zylinder 25 und dem ersten flüssigen Fluid 24a ein Dämpfungselement gebildet wird. Dabei ist der Kolben 28 derart angeordnet, dass dieser den Spalt 28a bildet.

Auf diese Weise weist die Rollenführungsfeder ein Dämpfungselement auf, das von dem Federelement entkoppelt ist. Während das Federelement von der Komprimierung des zweiten gasförmigen Fluids 24b und somit von der aktuellen Position des Kolbens bzw. der Auslenkung der Rollenführungsfeder abhängig ist, wird das Dämpfungselement von der Umströmung des Kolbens durch das erste flüssige Fluid 24a und somit von der momentanen Bewegungsgeschwindigkeit des Kolbens 28 bestimmt.

Auch lassen sich die beiden Elemente unabhängig voneinander einstellen. Während das Federelement über den Druck des zweiten gasförmigen Fluids 24b bestimmt wird, kann die Dämpfungswirkung über eine Veränderung der Viskosität des ersten flüssigen Fluids 24a oder eine Geometrieänderung des Spalts 28a im laufenden Betrieb bzw. ohne zusätzlichen Montageaufwand erzielt werden. Verschiedene Möglichkeiten der Geometrieänderung im laufenden Betrieb sind hierbei bekannt.

An dem Zylinder 25 ist zudem ein Drucksensor 23 angeordnet, der zu einer Druckbestimmung in dem Druckraum 26 vorgesehen ist. Über Vorrichtungen zum Einstellen des Federelements der Rollenführungsfeder 8 kann aus einem Druckreservoir das zweite gasförmige Fluid 24b in den Druckraum 26 des Zylinders 25 eingebracht bzw. aus diesem entnommen werden und so die Federwirkung verändert werden. Außerdem stellt der Zylinder 25 entsprechend seiner Ausbildung einen mechanischen Anschlag 29 für die Kolbenstange 27 bzw. den Kolben 28 bereit.

Figur 3 zeigt einen Kraftverlauf der Druckfeder 2 gemäß dem Stand der Technik mit einer linearen Kennlinie 31 sowie einen Kraftverlauf eines Federelements der Rollenführungsfeder 8 mit einer progressiven Kennlinie 33 in schematischer Darstellung. Das dargestellte Diagramm zeigt in einer oberen Hälfte den Kraftverlauf einer ersten Laufrolle 4 einer Rollenführung nach Figur 1, die auf einer ersten Seite der Führungsschiene 5 angeordnet ist, und in einer unteren Hälfte den dazugehörigen Kraftverlauf der entgegengesetzten zweiten Laufrolle 4 auf einer zweiten Seite der Führungsschiene 5. Je nach Auslenkung des Fahrkorbs fällt die entsprechende Druckkraft für eine Laufrolle 4 betragsmäßig, während die Druckkraft auf die andere Laufrolle 4 betragsmäßig ansteigt.

Die lineare Kennlinie gemäß dem Stand der Technik 31 und die entsprechende progressive Kennlinie 33 der Rollenführungsfeder 8 weisen dieselben Extremwerte bei einer betragsmäßig maximalen Auslenkung des Fahrkorbs sowohl in positiver als auch in negativer Richtung auf. Jedoch kann aufgrund des Kurvenverlaufs der progressiven Kennlinie 33 in einer neutralen Lage des Fahrkorbs (Auslenkung des Fahrkorbs = 0) eine deutlich geringere Kraft 34" mit Hilfe der Rollenführungsfeder 8 bereitgestellt werden als bei der linearen Kennlinie 31 gemäß dem Stand der Technik, deren bereitgestellte Kraft bzw. Druckkraft 34' in der neutralen Lage betragsmäßig wesentlich höher ist. Hierdurch lässt sich die voranstehend beschriebene Abplattung der Laufrollen 4 insbesondere im Stillstand des Fahrkorbes deutlich reduzieren, so dass hierdurch auftretende Vibrationen und zusätzliche Geräusche während eines Betriebs des Fahrkorbs vermieden werden können. Des weiteren zeigt die Kurve 32 die resultierende Kraft bzw. eine wirkende Führungskraft auf den Fahrkorb.

## Patentansprüche

1. Rollenführungsfeder für eine Rollenführung eines Aufzuges, wobei die Rollenführungsfeder (8)
mindestens ein Federelement und
mindestens ein Dämpfungselement umfasst
und das Dämpfungselement von dem Federelement entkoppelt ist.

2. Rollenführungsfeder nach Anspruch 1, wobei eine Federwirkung des Federelements von einer Auslenkung der Rollenführungsfeder und eine Dämpfungswirkung des Dämpfungselements von einer momentanen Geschwindigkeit bzw. einer Geschwindigkeit einer Auslenkungsänderung der Rollenführungsfeder abhängig ist.

3. Rollenführungsfeder nach Anspruch 1 oder 2, wobei die Rollenführungsfeder (8) außerdem ein Anschlagelement umfasst.

4. Rollenführungsfeder nach einem der Ansprüche 1 bis 3, wobei eine Federkennlinie (33) des mindestens einen Federelements einen progressiven Kurvenverlauf bzw. eine progressive Federcharakteristik aufweist.

5. Rollenführungsfeder nach einem der Ansprüche 1 bis 4, wobei die Federwirkung des Federelements durch eine Komprimierung eines Fluids (24) und/oder mindestens einer Feder und/oder mindestens eines komprimierbaren Feststoffs bereitgestellt ist.

6. Rollenführungsfeder nach einem der Ansprüche 1 bis 5, wobei das Federelement zur Veränderung der Federwirkung einstellbar und die Federcharakteristik bzw. der Kurvenverlauf der Federkennlinie (33) variierbar ist.

7. Rollenführungsfeder nach einem der Ansprüche 1 bis 6, wobei die Dämpfungswirkung des Dämpfungselements durch ein Verdrängen eines Fluids (24) bereitgestellt ist.

8. Rollenführungsfeder nach einem der Ansprüche 1 bis 7, wobei das Dämpfungselement zur Veränderung der Dämpfungswirkung einstellbar und eine Dämpfungscharakteristik des Dämpfungselements variierbar ist.

9. Rollenführungsfeder nach einem der Ansprüche 1 bis 8, wobei das Anschlagelement mindestens einen mechanischen Anschlag (29) umfasst.

10. Rollenführungsfeder nach einem der Ansprüche 4 bis 6, wobei der progressive Kurvenverlauf der Federkennlinie (33) durch eine geeignete Ausführung einer Kinematik der Rollenführung bereitgestellt ist.

11. Rollenführungsfeder nach einem der Ansprüche 1 bis 10, wobei die Rollenführungsfeder (8) mindestens einen Sensor (23) umfasst.

12. Rollenführungsfeder nach Anspruch 11, wobei der mindestens eine Sensor (23) derart ausgebildet ist, dass eine Auslenkung bzw. eine Längenänderung der Rollenführungsfeder (8) in einer Längsrichtung der Rollenführungsfeder (8) mittels des mindestens einen Sensors (23) bestimmbar ist.

13. Rollenführungsfeder nach Anspruch 11 oder 12, wobei der mindestens eine Sensor (23) mindestens einen Drucksensor umfasst.

14. Rollenführung eines Fahrkorbs mit
einem Rollenbock (1) und
mindestens einer Aufhängung (3), die bewegbar an dem Rollenbock (1) der Rollenführung angeordnet und zur Lagerung von mindestens einer Laufrolle ausgebildet ist,
mindestens einer Rollenführungsfeder (8), die wirksam mit der Aufhängung (3) und dem Rollenbock (1) verbunden ist, wobei die Rollenführungsfeder (8) mindestens ein Federelement und mindestens ein Dämpfungselement umfasst und das Dämpfungselement von dem Federelement entkoppelt ist.

15. Rollenführung nach Anspruch 14, wobei die mindestens eine Aufhängung (3) mindestens einen Rollenhebel umfasst, der schwenkbar an dem Rollenbock (1) der Rollenführung angeordnet ist.

16. Rollenführung nach einem der Ansprüche 14 oder 15, wobei die Rollenführungsfeder (8) nach einem der Ansprüche 11 bis 13 ausgebildet ist und eine Position der Aufhängung (3) bzw. der Laufrolle (4) bezüglich der Rollenführung oder dem Rollenbock (1) mittels des mindestens einen Sensors (23) bestimmbar ist.

17. Rollenführung nach Anspruch 16, wobei die Rollenführung Vorrichtungen zum Auslesen und Bereitstellen eines Sensorsignals des mindestens einen Sensors (23) umfasst.

18. Rollenführung nach Anspruch 17, wobei das Federelement zur Veränderung der Federwirkung und/oder das Dämpfungselement zur Veränderung der Dämpfungswirkung einstellbar ist und die Rollenführung außerdem Vorrichtungen zum Einstellen (22) des Federelements und/oder des Dämpfungselements umfasst.

19. Rollenführung nach Anspruch 18, wobei die Vorrichtungen zum Einstellen (22) des Federelements und/oder des Dämpfungselements zu einer Druckänderung in dem Federelement und/oder in dem Dämpfungselement ausgebildet sind.

20. Rollenführung nach einem der Ansprüche 14 bis 19, wobei die Rollenführungsfeder (8) nach einem der Ansprüche 2 bis 13 ausgebildet ist.

21. Verfahren zur Einstellung einer Rollenführungsfeder (8) mit den folgenden Schritten:
Bereitstellen einer Rollenführungsfeder (8), die wirksam mit einer Aufhängung (3) und einem Rollenbock (1) einer Rollenführung verbunden ist, mit mindestens einem Federelement, mindestens einem Dämpfungselement und mindestens einem Sensor (23), wobei das mindestens eine Dämpfungselement von dem mindestens einen Federelement entkoppelt ist und das Federelement zur Veränderung einer Federwirkung und/oder das Dämpfungselement zur Veränderung der Dämpfungswirkung einstellbar sind,
Auslesen von Sensorsignalen aus dem Sensor (23),
Verarbeiten der Sensorsignale,
Ansteuerung von Vorrichtungen zum Einstellen (22) des Federelements und/oder des Dämpfungselements.

22. Verfahren nach Anspruch 21, wobei die Schritte des Auslesens, Verarbeitens und Ansteuerns fernsteuerbar und/oder automatisch ausführbar sind.

23. Verfahren nach Anspruch 21 oder 22, wobei die Rollenführungsfeder (8) nach einem der Ansprüche 1 bis 13 ausgebildet ist.

24. Verfahren nach einem der Ansprüche 21 bis 23, wobei die Rollenführung nach einem der Ansprüche 14 bis 20 ausgebildet ist.
